# EUROPÄISCHE PATENTSCHRIFT

(11) **EP 1 121 394 B1**
(45) Veröffentlichungstag und Bekanntmachung des Hinweises auf die Patenterteilung: **18.08.2004**
(21) Anmeldenummer: 99950378.2
(22) Anmeldetag: 12.10.1999
(51) Int. Cl.: C09D 5/46, C09D 167/02

(54) **HITZEHÄRTBARE PULVERBESCHICHTUNGSSYSTEME**
THERMOSETTING POWDER COATING SYSTEMS
SYSTEMES THERMODURCISSABLES DE REVETEMENTS EN POUDRE

(30) Priorität: 15.10.1998 AT 172698; 07.12.1998 AT 205498
(43) Veröffentlichungstag der Anmeldung: 08.08.2001
(73) Patentinhaber: Tigerwerk Lack- u. Farbenfabrik GmbH & Co. Kg., 4600 Wels (AT)
(72) Erfinder: REICH, Gerhard, A-4600 Wels (AT)
(74) Vertreter: Barger, Werner, Dipl.-Ing.
(86) Internationale Anmeldenummer: PCT/AT1999/000243
(87) Internationale Veröffentlichungsnummer: WO 2000/023530

(56) Entgegenhaltungen:
- EP-A- 0 110 450
- EP-A- 0 818 487
- DE-A- 2 618 729
- DE-A- 4 012 020
- DE-A- 4 335 845
- US-A- 5 262 510

## Beschreibung

Die Erfindung betrifft hitzehärtbare Pulverbeschichtungssysteme auf der Basis von carboxylfunktionellen Polyesterharzen der Funktionalität 2 und von aus der Gruppe organischer Verbindungen, die zur Reaktion mit den Carboxylgruppen des Polyesters unter Herstellung einer kovalenten Bindung fähig sind, ausgewählten Vernetzern sowie ggf. gängigen Pigmenten, Füllstoffen und Additiven, deren Herstellung und Verwendung sowie Schutzschichten aus diesen Beschichtungssystemen. Weiters betrifft die Erfindung auch Polyesterharze, welche für die Formulierung hitzehärtbarer Pulverbeschichtungssysteme geeignet sind. Die Erfindung betrifft auch ein Verfahren zur Herstellung von hitzehärtbaren Pulverbeschichtungssystemen sowie die Verwendung des hitzehärtbaren Pulverbeschichtungssystems zur Herstellung von Überzügen bzw. Schutzschichten durch Wirbelsintern, elektrostatisches Beschichten.

Seit den siebziger Jahren gelten Pulverlacke auf der Basis von carboxylfunktionellen Polyesterharzen und der polyfunktionellen Epoxyverbindung Triglycidylisocyanurat (=TGIC) als Industrie-Standard zur Herstellung wetterfester Beschichtungen im Fassadenbau, bei Automobil-Zubehörteilen sowie allgemeinen industriellen Anwendungen. So beschreibt beispielsweise DE 26 18 729 Polyesterharze mit Säurezahlen von 50 bis 100 mg KOH/g Polyester für derartige Formulierungen.

Ein wichtiger Grund für die technische Vormachtstellung jener Pulverlacksysteme liegt im chemischen Charakter der Vernetzungsreaktion. Da es sich um eine Additionsreaktion zwischen den Oxiran- und Carboxylgruppen der Bindemittelpartner handelt, werden keine Abspaltprodukte freigesetzt, was für das optische Erscheinungsbild eingebrannter Beschichtungen höherer Schichtdicke, aber auch für die Umwelt vorteilhaft ist.

Beginnend vor wenigen Jahren wurde das toxikologische Risiko von Pulverlacken, welche TGIC enthalten, zunehmend diskutiert, was Anlaß zur Suche nach epoxyfunktionellen, aber auch sonstigen Alternativprodukten war und ist. Denn obwohl inzwischen TGIC und TGIC enthaltende Pulverlacke in vielen Ländern Europas und anderen Staaten wegen des mutagenen Potentials dieses Härters entsprechend gekennzeichnet werden müssen, bleibt festzuhalten, daß ein zu TGIC in allen Belangen technisch vollwertiger Ersatzstoff gegenwärtig nicht zur Verfügung steht.

Als Alternativen zu TGIC als Härter für carboxylfunktionelle Polyesterharze bieten sich derzeit unter anderen β-Hydroxyalkylamide wie Primid^{R} XL-552 (= Bis[N,N'-di-(β-hydroxyethyl)]-adipamid) oder Primid^{R} QM-1260 (= Bis[N,N'-di-(β-hydroxypropyl)]adipamid), beide EMS Chemie, an. Ein besonderes Merkmal dieser Härter liegt in ihrer nach heutigem Wissensstand völligen toxikologischen Unbedenklichkeit. Die EP 0 818 487 A2 offenbart β-hydroxyalkylamidgruppenhaltige Polyester, die Polymere analoger Funktionalität und Verwendbarkeit darstellen.

Weitere mögliche Alternativen zu TGIC als Härter für carboxylfunktionelle Polyesterharze sind beispielsweise die Glycidylester aromatischer oder cycloaliphatischer Dicarbonsäuren, siehe EP 0 110 450 B1; ein entsprechender kommerziell verfügbarer Härter von analogem chemischen Aufbau ist z. B. Araldit^{R} PT 910 (Terephthalsäurediglycidylester/Trimellit(h)säuretriglycidylester, ca. 75:25) der CIBA Spezialitätenchemie GmbH. Die Anwesenheit des trifunktionellen Trimellit(h)säureesters in Araldit^{R} PT 910 ist für die Vernetzungsdichte eingebrannter Beschichtungen als vorteilhaft im Vergleich zu reinen Diglycidylestern zu bewerten. Eine weitere Möglichkeit stellt auch die Verwendung epoxidierter Öle dar, siehe EP 0 600 546 A1; Bindemittelsysteme dieser Art bietet die DSM Resins bv unter der Bezeichnung UranoxR an. Als weitere potentielle Alternative ist ein dem TGIC sehr ähnliches Polyepoxid, das Tris-(β-methylglycidyl)isocyanurat, anzusehen, siehe PCT/JP95/02318. Als epoxidische Härter sind auch polymere Epoxide bekannt.

All diesen genannten Produkten kommt heute zur Formulierung von Pulverlacken aus carboxylfunktionellen Polyesterharzen zunehmend Bedeutung zu, wobei sich jedoch TGIC auf zahlreichen Märkten weiterhin behaupten konnte.

Polyesterharze zur Herstellung wetterstabiler Pulverbeschichtungen, welche mit Polyepoxiden und/oder β-Hydroxyalkylamiden gehärtet werden, weisen i. a. eine Säurezahl im Bereich von 15 bis 70 mg KOH/g Polyester und eine Hydroxylzahl kleiner/gleich 10 mg KOH/ g Polyester auf und bestehen im wesentlichen aus Einheiten aromatischer Dicarbonsäuren, wie Terephthal- und Isophthalsäure, neben welchen ggf. geringere Mengen an aliphatischen und/oder cycloaliphatischen Dicarbonsäuren, wie etwa Adipin- und/oder Cyclohexandicarbonsäure, Anwendung finden, und aliphatischen Diolen, und zwar bevorzugt verzweigten, wie Neopentylglykol, neben geringeren Anteilen von linearen und/oder cycloaliphatischen Diolen. Auch die Mitverwendung von Hydroxycarbonsäuren oder deren funktionellen Derivaten, wie etwa deren innere Ester (= Lactone), ist möglich. Bekannt ist auch die Modifizierung solcher Harze durch den Einsatz di- und trimerer Fettsäuren. Daneben können geringere Anteile von trioder höherfunktionellen sowie ggf. monofunktionellen Verbindungen Anwendung finden.

Es ist nun zu beobachten, daß ein bei Pulverlacken in der Regel mehr oder weniger stark ausgeprägtes Phänomen, nämlich jenes der physikalischen Alterung, auch bei solchen, die aus carboxylfunktionellen Polyesterharzen und Polyepoxiden formuliert werden, im allgemeinen stark, und noch stärker bei den aus carboxylfunktionellen Polyesterharzen und β-Hydroxyalkylamiden formulierten, in Erscheinung tritt. Die physikalischer Alterung äußert sich unter anderem in einer deutlichen Abnahme der Flexibilität eingebrannter Beschichtungen im Verlaufe von Tagen und Wochen, und zwar - je nach dem verwendeten System - selbst dann, wenn die Lagerung der beschichteten und eingebrannten Teile unter Normklimabedingungen (23°C, 50 % rel. Luftfeuchte) erfolgte, wie DE 44 01 438 A1 ausführlich und anschaulich darstellt.

Obige Anmeldung offenbart, daß Pulverbeschichtungen, deren Bindemittel sich aus a) dort näher definierten linearen carboxylfunktionellen Polyesterharzen und b) β-Hydroxyalkylamiden und/oder polyfunktionellen Epoxyverbindungen zusammensetzen, dann keinen feststellbaren Abbau an Flexibilität infolge physikalischer Alterung erfahren, wenn der Anteil von Isophthalsäure in jenen Polyesterharzen, bezogen auf die Gesamtmenge der verwendeten Dicarbonsäuren, 10 Mol-% nicht übersteigt. Mittels derartiger Formulierungen können also die hohen mechanischen Anforderungen, wie sie in der Precoating Metal- und Coil-Coating-Technologie infolge späterer Verformungen beschichteter Teile an Pulverbeschichtungen gestellt werden, erfüllt werden.

Es hat sich allerdings gezeigt, daß die Beschichtungen entsprechend der in der DE 44 01 438 A1 geoffenbarten Beispiele hinsichtlich ihrer Beständigkeit gegen Schnellbewitterung im Q-Panel Accelerated Weathering Tester gemäß ASTM G 53-77 nicht jenes Niveau erreichen, welches bei Pulverlacken für die Anwendung an der Fassade heute allgemein vorauszusetzen ist.

Die DE 40 12 020 A1 offenbart ein Verfahren zum Beschichten von Substraten mit wärmehärtbaren Pulverlackzubereitungen bei hoher Temperatur und kurzen Zeiten. Solche Pulverlackzubereitungen bestehen aus A) carboxylfunktionellem Polyesterharz, B) einer mit den Carboxylgruppen reaktionsfähigen Verbindung und C) üblichen Additiven.

Die Polyesterharze A), die Hydroxylgruppen enthalten können, umfassen zwei oder mehr Carboxylgruppen je Molekül und weisen eine Säurezahl von 10 bis 70 und eine Hydroxylzahl von 0 bis 40 auf, mit der Maßgabe, daß die Hydroxylzahl immer geringer als die Säurezahl ist.

Als B) Härter sind Oxiranverbindungen mit zwei oder mehr Epoxidgruppen je Molekül, wobei in gleicher Weise Triglycidylisocyanurat, Bisphenolglycidylether und/oder dessen höhere Homologen geoffenbart sind.

Konkret wird dabei aber auf die Mitverwendung von Verbindungen der Funktionalität > 2 unter Angabe eines Mindestanteils von 1 Mol %, bezogen auf die Gesamtformulierung der eingesetzten Komponenten A) und B), besonders hingewiesen. So ist in sämtlichen Beispielen die Verwendung erheblicher Anteile der trifunktionellen Komponenten Trimethylpropan bzw. Trimellithsäureanhydrid geoffenbart.

Die US 5 262 510 A offenbart wärmehärtbare Pulverlack-Beschichtungsmassen, die durch Kombination eines Polyesterharzes mit wenigstens 4 reaktiven Carboxylgruppen pro Molekül mit einem Epoxidharz auf der Basis von Bisphenol A-diglycidylether erhalten werden.

Dabei sind als Monomere zur Herstellung des Polyesterharzes aliphatische oder alicyclische Alkohole mit 2 bis 3 reaktiven Gruppen und 2 bis 6 Kohlenstoffatomen und aliphatische, alicyclische oder aromatische Carbonsäuren mit 2 bis 4 Carboxylgruppen und 4 bis 12 Kohlenstoffatomen genannt. Unter den Alkoholen mit 2 reaktiven Gruppen ist u.a. auch 1,5-Pentandiol ohne nähere Spezifizierung seines Einsatzzweckes in der gesamten Offenbarung der US 5 262 510 A angegeben.

Die DE 43 35 845 legt offen, daß Pulverbeschichtungsmassen aus Polyesterharzen mit einer Säurezahl von 15 bis 75 mg KOH/g Polyester, wobei Isophthalsäure mindestens 80 Mol-% der Gesamtmenge aller verwendeten Dicarbonsäuren ausmacht, und mindestens einem β-Hydroxyalkylamid als Härter eine außerordentlich hohe Beständigkeit im Schnellbewitterungstest mit UVB-Belichtung aufweisen.

Die EP 0 389 926 B1 offenbart, daß Pulverbeschichtungsmassen aus Polyesterharzen mit einer Säurezahl von 15 bis 70 mg KOH/g Polyester mit mindestens 75 Mol-% Isophthalsäure, bezogen auf die Gesamtmenge aller verwendeten Dicarbonsäuren, und Triglycidylisocyanurat als Härter eine außerordentlich hohe Beständigkeit im Schnellbewitterungstest mit UVB-Belichtung aufweisen.

Es ist aber anderseits bekannt, daß bei Pulverbeschichtungsmassen mit derart hohen Anteilen von Isophthalsäure gerade die Flexibilität eine Schwachstelle darstellt und es bei zahlreichen Farbtönen überhaupt unmöglich ist, beschichtete Objekte - sogar unmittelbar nach dem Einbrennen - entsprechend zu verformen, ohne diese Lackschichten - zumindest an ihrer Oberfläche - zu beschädigen.

Die EP 0 389 926 B1 sieht bei pulverförmigen Beschichtungsmassen auf der Basis von carboxylfunktionellen Polyesterharzen - mit mindestens 75 Mol-% Isophthalsäure als Säurekomponente - und Triglycidylisocyanurat, welche höchste Wetterbeständigkeit bei gleichzeitig bestmöglicher Flexibilität als Zielsetzung haben, die Mitverwendung von Harzrohstoffen der Funktionalität > 2 im molaren Gesamtausmaß von maximal 8 % vor. Daneben liefert diese Patentschrift Hinweise, daß die Verwendung von Isophthalsäure im Vergleich zu Terephthalsäure (im allgemeinen) ungenügende Schlagfestigkeit zur Folge hat. Gleiches gilt auch für in der DE 43 35 845 C2 geoffenbarte pulverförmige Beschichtungsmassen, bei welchen β-Hydroxyalkylamide als Vernetzer enthalten sind.

In der GB 2 189 489 A wird für carboxylierte Polyesterharze ein hoher Anteil von Terephthalsäure als aromatische Dicarbonsäure als erforderlich zur Erreichung hochwertiger mechanischer Eigenschaften bezeichnet.

Die im Vergleichsbeispiel der DE 44 01 438 A1 geoffenbarte Formulierung erbringt zwar die im europäischen Fassadenbau geforderte Beständigkeit gegen Schnellbewitterung, nicht jedoch entsprechend den in den Tabellen dieser Offenlegungsschrift dargelegten Werten die erforderliche Beständigkeit gegen physikalische Alterung mit ihren für die Verformbarkeit der Beschichtung abträglichen Folgen.

Somit verfügen die Hersteller von Fassadenelementen, welche nach der rationellen Precoating Metal- oder der Coil-Coating-Technologie arbeiten, über keine - wegen des spaltproduktfreien Charakters ihrer Vernetzungsreaktion hoch geschätzten - Pulverbeschichtungsmassen aus carboxylfunktionellen Polyesterharzen und Polyepoxiden oder - wegen ihrer nach heutigem Wissensstand völligen toxikologischen Unbedenklichkeit hoch geschätzten - Pulverbeschichtungsmassen aus carboxylfunktionellen Polyesterharzen und β-Hydroxyalkylamiden, welche den nachträglich zu verformenden Fassadenteilen jene Wetterfestigkeit verleihen, die für den Fassadenbau heute als Standard gilt. Dies ist im Hinblick auf das hohe Maß an Umweltfreundlichkeit, welches Pulverlacke vor anderen Beschichtungen auszeichnet, ein unbefriedigender Umstand, denn die alternativ verfügbaren lösemittelhaltigen Beschichtungen erfordern aus ökologischen Gründen die Entfernung der Emissionen durch aufwendige Nachverbrennung und/oder Filteranlagen aus der Abluft von Betrieben, welche solche Beschichtungssysteme verarbeiten, was Kosten verursacht und die Umwelt belastet.

Die der Erfindung zugrundeliegende Aufgabe ist daher die Überwindung der dem vorgenannten Stand der Technik anhaftenden Nachteile.

Dies wird erfindungsgemäß durch eine Pulverlackformulierung, bestehend aus mindestens einem a) carboxylfunktionelgruppen des Polyesters unter Herstellung einer kovalenten Bindung fähig sind, ausgewählten Vernetzer und c) üblichen Additiven sowie ggf. Pigmenten und Füllstoffen, erreicht, wobei das a) Polyesterharz eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt, welche Pulverlackformulierung dadurch gekennzeichnet ist, daß das Polyesterharz
maximal 80 Mol-% Isophthalsäure, bezogen auf die Gesamtmenge an Dicarbonsäuren,
mindestens 20 Mol-% mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C
enthält,
wobei die genannten Diole Pentandiol 1,5 und/oder mindestens ein mit einem oder mehreren seitlichem Alkylsubstituenten ausgestattetes Pentandiol 1,5 wie z.B. 3-Methylpentandiol 1,5, im molaren Gesamtausmaß von 0,5 bis 30%, bezogen auf die Menge aller Diole, umfassen.
pentandiol 1,5, im molaren Gesamtausmaß von 0,5 bis 30%, bezogen auf die Menge aller Diole, umfassen.

Als Diol ist, gegebenenfalls zusätzlich, ein dimerisierter Fettalkohol enthalten.

Bevorzugterweise wird das Pentandiol 1,5 eingesetzt.

Die Glasübergangstemperatur beträgt vorzugsweise mindestens 40° C und insbesondere mindestens 45° C.

Selbstverständlich ist auch die Mitverwendung von Hydroxycarbonsäuren oder deren funktionellen Derivaten, wie etwa deren innere Ester (= Lactone) möglich. Ebenso können anstelle von Carbonsäuren deren funktionelle Derivate wie Ester oder gegebenenfalls Anhydride Anwendung finden. Mehrwertige Alkohole, die vicinale Hydroxylgruppen enthalten, sind durch entsprechende Epoxidverbindungen substituierbar.

Als Vernetzer werden erfindungsgemäß β-Hydroxyalkylamid oder Polyepoxide eingesetzt.

Vorzugsweise werden 5 bis 30 Mol-% Isophthalsäure verwendet.

Das Überraschende der vorliegenden Erfindung liegt im gänzlich unerwarteten Effekt, wonach infolge der Mitverwendung jener α,ω-Diole, welche zwischen den Hydroxylgruppen 5 C-Atome in Folge aufweisen, diese Pulverbeschichtungen mit mehr als 10 Mol-% Isophthalsäure, bezogen auf die Gesamtmenge der bei der Formulierung des Polyesters verwendeten Dicarbonsäuren, nicht nur jene Resistenz gegen physikalische Alterung zeigen, die gemäß durch die DE 44 01 438 A1 geoffenbarten Standes der Technik Beschichtungsmassen eigen ist, deren Polyesterkomponente einen Isophthalsäureanteil von höchstens 10 Mol %, bezogen auf die Gesamtheit der verwendeten Dicarbonsäuren, aufweist, sondern überdies noch über eine ganz erheblich verbesserte Beständigkeit gegen Schnellbewitterung im Q-Panel Accelerated Weathering Tester gemäß ASTM G 53-77 aufweisen.

Als ganz besonders überraschend darf dabei gewertet werden, daß dieser unerwartete Effekt infolge der Mitverwendung jener α,ω-Diole, die zwischen den Hydroxylgruppen 5 C-Atome in Folge aufweisen, schon bei einem Anteil von 0,5 Mol%, bezogen auf die Gesamtheit aller verwendeten Diole, deutlich zutage tritt, wie die entsprechenden Beispiele und Vergleichsbeispiele belegen.

Vorangegangene Versuche, Pulverbeschichtungen aus β-Hydroxyalkylamiden wie beispielsweise Primid^{R} XL-552 und carboxylfunktionellen Polyesterharzen, die einen Isophthalsäureanteil von über 10 Mol-%, bezogen auf die Gesamtheit der verwendeten Dicarbonsäuren, aufweisen, durch Mitverwendung von Harzrohstoffen, deren flexibilisierende Wirkung auf Pulverbeschichtungen vielfach dokumentiert wird [siehe z.B. die Ausführungsbeispiele in DE 43 35 845 C2 (welche 1,4-Cyclohexandicarbonsäure, Adipinsäure oder Hexandiol 1,6 für sich oder in Kombination offenbaren) oder in DE 44 01 438 A1 (hier werden Adipinsäure und/oder 1,4-Cyclohexandicarbonsäure geoffenbart)] gegen physikalische Alterung entsprechend zu stabilisieren, waren fehlgeschlagen, wie die Vergleichsbeispiele C und D demonstrieren.

Vorangegangene Versuche, Pulverbeschichtungen aus Polyepoxiden, wie beispielsweise Triglycidylisocyanurat und carboxylfunktionellen Polyesterharzen, die einen Isophthalsäureanteil von über 10 Mol-%, bezogen auf die Gesamtheit der verwendeten Dicarbonsäuren, aufweisen, durch Mitverwendung von Harzrohstoffen, deren flexibilisierende Wirkung auf Pulverbeschichtungen, z.B. gemäß EP 0 110 450 B1 mittels Adipinsäure und Hexandiol 1,6 in Kombination oder gemäß DE 44 O1 438 A1 mittels Adipinsäure und/oder 1,4-Cyclohexandicarbonsäure, nahegelegt wird, gegen physikalische Alterung entsprechend zu stabilisieren, waren fehlgeschlagen.

Zwar offenbart DE 44 01 438 A1 die Verwendung von mindestens 50 Mol-Teilen - bezogen auf die Gesamtheit der verwendeten Diole - mindestens eines verzweigten aliphatischen Diols mit 4 bis 12 C-Atomen, worunter beispielsweise auch 3-Methylpentandiol 1,5 verstanden werden kann, sowie die mögliche Mitverwendung mindestens eines linearen aliphatischen Diols mit 2 bis 22 C-Atomen, worunter auch 1,5-Pentandiol fällt. Es gibt aber hierin keinerlei Hinweis auf die besondere Eignung eben dieser Rohstoffe, erhöhte Resistenz gegen physikalische Alterung - trotz höherer Anteile an Isophthalsäure - neben einer verbesserten Beständigkeit gegen Schnellbewitterung - aufgrund erhöhter Anteile an Isophthalsäure - zu erreichen.

Sehr gute Ergebnisse resultieren aus der Mitverwendung von 5,8 Mol-% Pentandiol 1,5, bezogen auf die Gesamtmenge aller verwendeten Diole, in einem Polyester, der unter anderem 13,6 Mol-% Isophthalsäure, bezogen auf die Gesamtheit der verwendeten Dicarbonsäuren, enthält und mit Triglycidylisocyanurat oder Primid^{R} XL-552 zu einem Pulverlack formuliert wird. Neben entsprechender Resistenz gegen Flexibilitätsabbau infolge physikalischer Alterung erbrachten Pulverbeschichtungsmassen dieser Zusammensetzung nach ihrem Einbrennen sehr gute Beständigkeit gegen Schnellbewitterung unter UVB-Belichtung. Besondere Hervorhebung verdient auch der exzellente Verlauf und Glanz jener Beschichtungen.

Ebenfalls hervorragende Ergebnisse werden erhalten, wenn anstelle von Pentandiol 1,5 3-Methylpentandiol 1,5 verwendet wird. Besonders überraschend dabei ist, daß bei der Verwendung von 1,6-Hexandiol anstelle von 3-Methylpentandiol 1,5 - trotz gleichen Molekulargewichts beider Rohstoffe - die Formulierung mit 1,6-Hexandiol hinsichtlich ihrer Flexibilität nach Lagerung Nachteile aufweist, obwohl von einer unverzweigten Kette aus 6 Kohlenstoffatomen eigentlich ein höherer Beitrag zur Flexibilisierung der Beschichtung erwartet werden könnte als von einer Kette aus 5 Kohlenstoffatomen mit seitlicher Methylgruppe. Betrachtungen dieser Art werden auch in der Broschüre IP-70 der Amoco Chemical Corporation (How Ingredients Influence Unsaturated Polyester Properties), Seite 20 im ersten Abschnitt, zweiter Absatz, angestellt.

Selbstverständlich ist es im Rahmen der vorliegenden Erfindung durch Maßnahmen gemäß dem Stande der Technik möglich, die durch die erfindungsgemäße Mitverwendung von (substituierten) Pentandiol(en) 1,5 gegen physikalische Alterung stabilisierten mechanischen Eigenschaften der Pulverlackfilme hinsichtlich ihrer Flexibilität und/oder Wetterbeständigkeit weiter zu verbessern.

Erfindungsgemäß (unter Verwendung von Pentandiol 1,5 und/oder 3-Methylpentandiol 1,5) hergestellte Formulierungen mit einem molaren Terephthalsäure - Anteil > 85 % sowie einem Isophthalsäure - Anteil < 10%, bezogen auf die Gesamtmenge aller verwendeten Dicarbonsäuren, waren - verglichen mit den beiden aus DE 44 01 438 A1 genannten Beispielen - auch im gekühlten Zustand noch sehr gut im Reserve Impact-Test verformbar, während sie im Q-Panel Accelerated Weathering Tester gemäß ASTM G 53-77 den genannten nicht nachstanden. Die so formulierten Harze liegen somit zwar formell im Bereich der Offenbarung der DE 44 01 438 A1, unterscheiden sich jedoch durch ihre Leistungsfähigkeit von den dort offenbarten Beschichtungsmassen wesentlich.

Derartige grundsätzlichen Weiterverbesserungen der Lackeigenschaften beispielsweise zugunsten der mechanischen Werte und - allfällig unter gewissen Einbußen beim Verlauf oder der Wetterfestigkeit - können in der Praxis aus verschiedenen Gründen durchaus wünschenswert und vorteilhaft sein. Man bedenke nur, daß im Zuge der industriellen Herstellung der Pulverlackrohstoffe (Toleranzen in der Säurezahl und Hydroxylzahl der Polyesterharze, im Hydroxyläquivalentgewicht bzw. Epoxyäquivalentgewicht der β-Hydroxyalkylamide bzw. Polyepoxide, sowie in ihrer Körnung) wie auch ihrer industriellen Verarbeitung zu Pulverlack (Dispergierqualität), dessen Applikation (Schichtdicke) sowie letztlich der Verformung der mit ihm beschichteten Teile (möglicherweise unzureichende Temperierung der zu verformenden Teile) mit teilweisen Abweichungen von den Idealparametern zu rechnen ist. Als Beispiel sei nur EP 0 548 896 A1 genannt, wo ausgeführt wird, wie hilfreich optimale Korngröße und -form des Bindemittels für Pulverlacke sind, um den Dispergiervorgang des Pulverlack-Rohansatzes im Extruder, welcher einen erheblichen Einfluß auf die Qualität des fertigen Pulverlackes hat, bestmöglich ablaufen zu lassen. (Lackschichten, welche "pinholes" infolge von Dispergiermängeln - aufgrund nicht idealer Körnung oder aus Die Erfindung betrifft auch ein carboxylfunktionelles Polyesterharz, das eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegtebenenfalls Hydroxycarbonsäuren, zusammensetzt, welches Polyesterharz dadurch gekennzeichnet ist, daß das Polyetserharz
maximal 80 Mol-% Isophthalsäure, bezogen auf die Gesamtmenge an Dicarbonsäuren,
mindestens 20 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbon-säuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Dicarbonsäuren, mindestens eines verzweigten aliphatischen Diols mit 4 bis 12 C-Atomen, welches auch eine Estergruppe enthalten kann, maximal 50 Mol-%,, bezogen auf die Gesamtmenge an Dicarbonsäuren, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C enthält,
wobei die genannten Diole Pentandiol 1,5 und/oder mindestens ein mit einem oder mehreren seitlichem Alkylsubstituenten ausgestattetes Pentandiol 1,5, wie z.B. 3-Methylpentandiol 1,5, im molaren Gesamtausmaß von 0,5 bis 30%, bezogen auf die Menge aller Diole, umfassen.

Bevorzugterweise wird das Pentandiol 1,5 eingesetzt. stituenten ausgestattetes Pentandiol 1,5, wie z.B. 3-Methylpentandiol 1,5, im molaren Gesamtausmaß von 0,5 bis 30%, bezogen auf die Menge aller Diole, umfassen.

Bevorzugterweise wird das Pentandiol 1,5 eingesetzt. Ferner kann als Diol ein dimerisierter Fettalkohol enthalten sein.

Die Glasübergangstemperatur beträgt vorzugsweise mindestens 40° C und insbesondere mindestens 45° C.

Selbstverständlich ist auch die Mitverwendung von Hydrocarbonsäuren oder deren funktionellen Derivaten, wie etwa deren innere Ester (= Lactone) möglich. Ebenso können anstelle von Carbonsäuren deren funktionelle Derivate, wie Ester oder gegebenenfalls Anhydride, Anwendung finden. Mehrwertige Alkohole, die vicinale Hydroxylgruppen enthalten, sind durch entsprechende Epoxidverbindungen substituierbar.

Bei den unter b) als Vernetzer genannten β-Hydroxyalkylamiden handelt es sich um solche, die mindestens zwei Hydroxyalkylamidgruppen pro Molekül enthalten. Besonders geeignet im Sinne der Erfindung sindBis[N,N'-di-(β-hydroxyethyl)]-adipamid und Bis[N,N'-di-(β-hydroxypropyl)] adipamid, welche unter den Bezeichnungen Primid^{R} XL-552 und Primid^{R} QM-1260 im Handel erhältlich sind. Zur Erreichung guter lacktechnischer Eigenschaften werden für jede Carboxylgruppe des carboxylierten Polyesters 0,5 bis 1,5, vorzugsweise 0,75 bis 1,25 β-Hydroxyalkylamidgruppen verwendet. Ebenso sind β-hydroxyalkylamidgruppenhaltige Polyester geeignet. In den anschließend vorgestellten Beispielen werden stöchiometrisch äquivalente Mengen der Bindemittel-Partner verwendet.

Als Vernetzerkomponente b) eignen sich ebenso Polyepoxide. Dabei ist der Vernetzer ein monomeres oder polymeres Polyepoxid mit mindestens 2 Epoxidgruppen. Es kann ein Glycidylester einer monomeren Polycarbonsäure sein, die insbesondere Terephthalsäure und/oder Trimellit(h)säure, vorzugsweise deren Kombination und insbesondere deren Kombination im Verhältnis von ca. 3:1 sein kann. Eine solche Kombination ist der im Handel erhältliche Härter Araldit^{R} PT 910.

Der Vernetzer kann auch ein Glycidylether der Cyanursäure oder Isocyanursäure sein, wobei dieser Triglycidylisocyanurat (TGIC), z.B. im Handel erhältlicher Araldit^{R} PT 810, und/oder Tris-(β-methylglycidyl)isocyanurat ist. Der Vernetzer kann aber auch ein Glycidylester eines carboxyfunktionellen Polyesterharzes und/oder ein glycidfunktionelles Polyacrylat sein.

Besondere Eignung weisen auch die in EP 0 600 546 A1 geoffenbarten polyepoxidischen Verbindungen, wie z.B. epoxidierte Öle, epoxidierte modifizierte Öle und epoxidierte Alkyde auf. Zur Erreichung guter lacktechnischer Eigenschaften werden für jede Carboxylgruppe des carboxylierten Polyesters 0,5 bis 2,0, vorzugsweise 0,75 bis 1,5 Epoxidgruppen verwendet.

Im Gegensatz zur Situation bei den β-Hydroxylalkylamiden findet neben der gewünschten Polyester-Epoxid-Reaktion auch ein gewisser Anteil an Eigenpolymerisation des Epoxidhärters statt, so daß hier in der Praxis anstelle von streng stöchiometrischen Mengenverhältnissen empirisch ermittelte Bindemittel-Verhältnisse verwendet werden.

Die erfindungsgemäßen Beschichtungen können weiters, wie unter c) genannt, herkömmliche anorganische oder organische Pigmente, Füllstoffe, Wachse und Wachsderivate, mikronisierte Kunststoffe wie Polyamide, Polyethylen, Polypropylen oder Polytetrafluorethylen, sowie für die Herstellung von Pulverlacken übliche Additive, beispielsweise Verlaufsmittel, Entgasungshilfsmittel, Oxidationsstabilisatoren, Lichtschutzmittel in Form von UV-Absorbern und/oder HALS-Verbindungen, Beschleuniger, Kieselsäure und/oder Aluminiumoxid zur Verbesserung der Rieselfähigkeit oder Tribo-Additive enthalten.

Die Herstellung der erfindungsgemäßen carboxylfunktionellen Polyesterharze erfolgt in bekannter Weise, nach welcher in einer ersten Reaktionsstufe unter Diolüberschuß unter Erhitzen der betreffenden Rohstoffe in Anwesenheit üblicher Veresterungskatalysatoren auf Temperaturen bis etwa 250°C und unter Abtrennung des entstehenden Reaktionswassers ein hydroxylfunktioneller Polyester hergestellt wird, welcher in einer zweiten Reaktionsstufe mit einer oder mehreren dibasischen Carbonsäuren, bei welchen es sich auch um deren funktionelle Derivate handeln kann, zu einem carboxylfunktionellen Polyester umgesetzt wird.

Erfindungsgemäß besteht das Verfahren zur wärmehärtbarer Pulverlackformulierungen auf Basis von carboxylfunktionellen Polyesterharzen darin, daß dem Bindemittelharz mindestens ein Vertreter aus der Gruppe der β-Hydroxyalkylamide oder Polyepoxide und gegebenenfalls weitere Additive nach einem oder mehreren der vorangehenden Ansprüchen gemischt, bei 80 bis 130° C extrudiert, ausgetragen, granuliert, gemahlen und auf eine Korngröße < 100 µm abgesiebt werden.

Die Erfindung betrifft ferner die Verwendung oben genannter Pulverbeschichtungsmassen zur Herstellung von Schutzschichten bzw. Überzügen auf Gegenständen durch elektrostatisches Beschichten oder Wirbelsintern.

Erfindungsgemäß werden die Schutzschichten bzw. Überzüge auf den Gegenständen bei Temperaturen zwischen 120° bis 220° C, vorzugsweise 130 bis 200° C, insbesondere 140 - 160°C eingebrannt. Auf solche Weise wird auch die Beschichtung von a) wärmesensiblen Untergründen, wie Kunstoffe, Holz oder vom Holz abgeleitete Veredelungsprodukte, hochfeste (Leicht-)Metallegierungen, b) zum Ausgasen neigenden porösen Untergründen, wie (feuer-) verzinkte Metallteile, Teile aus Metallguß, Keramik, aber auch von c) dickwandigen Objekten hoher Wärmekapazität in technisch und/oder wirtschaftlich zufriedenstellender Weise ermöglicht.

Die Erfindung betrifft auch mit oben genannten Pulverbeschichtungsmassen beschichtete bzw. überzogene Gegenstände.

Prinzipiell kann daneben auch nach anderen Verfahren zur Herstellung der Beschichtungsmassen aus ihren Komponenten vorge-gangen werden, indem etwa unter Zuhilfenahme von Lösemitteln homogene Mischungen hergestellt werden, aus welchen pulverförmige Massen durch Ausfällung oder destillative Abtrennung der Lösemittel (Sprühtrocknung) gewonnen werden können. Eine Sonderform dieses Verfahrens, bei welchem überkritisches Kohlendioxid den Part des Lösemittel übernimmt, ist aus der WO 94/09913 (PCT/US93/10289) bekannt.

Die Applikation der erfindungsgemäßen Beschichtungsmassen erfolgt nach Verfahren, welche für Pulverlacke üblich sind. Es sind dies beispielsweise elektrostatische Sprühvorrichtungen, welche nach dem Corona- oder Triboverfahren arbeiten, daneben ist auch die Wirbelbett-Applikation gängig.

Die erfindungsgemäßen Pulverlacke sind von ausreichender Lagerstabilität und liefern nach ihrer Vernetzung bei Temperaturen von 120 bis 220°C sehr guten Verlauf; ihre gute Beständigkeit gegen (Schnell-)Bewitterung und ihr hohes mechanisches Niveau, welches der Alterung sehr gut widersteht, wurde zuvor schon hervorgehoben.

Die Herstellung und die Eigenschaften der erfindungsgemäßen sowie der zum Vergleich dienenden Polyesterharze sowie der daraus erzeugten Pulverlacke wird an Hand nachfolgender, den Umfang der Erfindung nicht einschränkender Beispiele beschrieben. Zur Charakterisierung der Endeigenschaften der Polyesterharze werden hierbei ihre Säurezahl (SZ), ihre Hydroxylzahl (OHZ) sowie ihre Glasübergangstemperatur (Tg) herangezogen.

### Herstellung der carboxylfunktionellen Polyesterharze:

### Vergleichsbeispiel A

In einem 2 l-Reaktionsgefäß, ausgestattet mit Rührer, Temperaturfühler, partieller Rückflußkolonne, Destillationsbrücke und Inertgaseinleitung (Stickstoff) werden 440,08 g (4,225 Mol) 2,2-Dimethylpropandiol 1,3 und 69,22 g (1,115 Mol) Ethylenglykol vorgelegt und unter Erwärmen auf maximal 140°C unter Stickstoffatmosphäre aufgeschmolzen. Unter Rühren werden dann 801,63 g (4,825 Mol) Terephthalsäure sowie 0,1%, bezogen auf die Gesamtmenge des fertigen Harzes, Sn-haltiger Katalysator zugesetzt und die Massetemperatur schrittweise auf 240°C erhöht. Die Reaktion wird bei dieser Temperatur fortgesetzt, bis kein Destillat mehr entsteht und die Säurezahl des hydroxy-funktionellen Polyesterharzes < 10 mg KOH / g Polyesterharz ist.

Anschließend werden 47,35 g Isophthalsäure, 41,65 g Adipinsäure sowie 49,08 g Cyclohexandicarbonsäure 1,4 (jeweils 0,285 Mol) zugesetzt und die Veresterung bis zum Erreichen der gewünschten Säurezahl (etwa 34) fortgesetzt, wobei die Reaktion zuletzt durch die Anwendung von Vakuum, etwa 100 mbar, unterstützt wird. Das fertige Harz weist folgende Kennzahlen auf: SZ 33,4, OHZ 3,4, Tg ca. 55,5°C.

### Vergleichsbeispiel B

Analog zum Vergleichsbeispiel A werden in der ersten Reaktionsstufe 433,31 g (4,16 Mol) 2,2-Dimethylpropandiol 1,3, 73,25 g (1,18 Mol) Ethylenglykol, 0,1%, bezogen auf die Gesamtmenge des fertigen Harzes, Sn-haltiger Katalysator und 802,46 g (4,83 Mol) Terephthalsäure zu einem hydroxylfunktionellen Polyesterharz umgesetzt.

Dieses wird in der beschriebenen Weise unter Zusatz von 70,61 g Isophthalsäure und 62,11 g Adipinsäure (jeweils 0,425 Mol) zum fertigen Polyesterharz umgesetzt. Das fertige Harz weist folgende Kennzahlen auf: SZ 34,6, OHZ 2,4, Tg ca. 53,5°C.

### Vergleichsbeispiel C

Analog zum Vergleichsbeispiel A werden in der ersten Reaktionsstufe 491,64 g (4,72 Mol) 2,2-Dimethylpropandiol 1,3, 38,49 g (0,62 Mol) Ethylenglykol, 0,1%, bezogen auf die Gesamtmenge des fertigen Harzes, Sn-haltiger Katalysator und 782,52 g (4,71 Mol) Terephthalsäure zu einem hydroxylfunktionellen Polyesterharz umgesetzt.

Dieses wird in der beschriebenen Weise unter Zusatz von 127,93 g Isophthalsäure (0,77 Mol) und 29,23 g Adipinsäure (0,20 Mol) zum fertigen Polyesterharz umgesetzt. Das fertige Harz weist folgende Kennzahlen auf: SZ 34,7, OHZ 2,8, Tg ca. 58,0°C.

### Vergleichsbeispiel D

Analog zum Vergleichsbeispiel A werden in der ersten Reaktionsstufe 491,64 g (4,72 Mol) 2,2-Dimethylpropandiol 1,3, 19,24 g (0,31 Mol) Ethylenglykol, 36,64 g (0,31 Mol) Hexandiol 1,6, 0,1%, bezogen auf die Gesamtmenge des fertigen Harzes, Sn-haltiger Katalysator und 782,52 g (4,71 Mol) Terephthalsäure zu einem hydroxylfunktionellen Polyesterharz umgesetzt.

Dieses wird in der beschriebenen Weise unter Zusatz von 127,93 g Isophthalsäure (0,77 Mol) und 29,23 g Adipinsäure (0,20 Mol) zum fertigen Polyesterharz umgesetzt. Das fertige Harz weist folgende Kennzahlen auf: SZ 34,0, OHZ 4,5, Tg ca. 56,0°C.

### Vergleichsbeispiel E

Analog zum Vergleichsbeispiel A werden in der ersten Reaktionsstufe 445,28g (4,275 Mol) 2,2-Dimethylpropandiol 1,3, 70,15 g (1,13 Mol) Ethylenglykol, 0,1%, bezogen auf die Gesamtmenge des fertigen Harzes, Sn-haltiger Katalysator und 794,98 g (4,785 Mol) Terephthalsäure zu einem hydroxylfunktionellen Polyesterharz umgesetzt.

Dieses wird in der beschriebenen Weise unter Zusatz von 47,35 g Isophthalsäure, 41,65 g Adipinsäure sowie 49,08 g Cyclohexandicarbonsäure 1,4 (jeweils 0,285 Mol) zum fertigen Polyesterharz umgesetzt. Das fertige Harz weist folgende Kennzahlen auf: SZ 27,5, OHZ 3,7, Tg ca. 56,0°C.

### Vergleichsbeispiel F:

Analaog zu Vergleichsbeispiel A werden in der ersten Reaktionsstufe 491,64 g (4,72 Mol) 2,2-Dimethylpropandiol 1,3, 38,49 g (0,62 Mol) Ethylenglykol, 0,1 %, bezogen auf die Gesamtmenge des fertigen Harzes, Sn-haltiger Katalysator und 777,54 g (4,68 Mol) Terephthalsäure zu einem hydroxylfunktionellen Polyesterharz umgesetzt.

Dieses wird in der beschriebenen Weise unter Zusatz von 99,68 g Isophthalsäure (0,60 Mol) und 58,46 g Adipinsäure (0,40 Mol) zum fertigen Polyesterharz umgesetzt. Das fertige Harz weist folgende Kennzahlen auf: SZ 34,6, OHZ 4,5, Tg ca. 55,5°C.

### Vergleichsbeispiel G:

Analaog zu Vergleichsbeispiel A werden in der ersten Reaktionsstufe 491,64 g (4,72 Mol) 2,2-Dimethylpropandiol 1,3, 36,94 g (0,595 Mol) Ethylenglykol, 2,95 g (0,025 Mol) Hexandiol 1,6, 0,1 %, bezogen auf die Gesamtmenge des fertigen Harzes, Sn-haltiger Katalysator und 777,54 g (4,68 Mol) Terephthalsäure zu einem hydroxylfunktionellen Polyesterharz umgesetzt.

Dieses wird in der beschriebenen Weise unter Zusatz von 99,68 g Isophthalsäure (0,60 Mol) und 58,46 g Adipinsäure (0,40 Mol) zum fertigen Polyesterharz umgesetzt. Das fertige Harz weist folgende Kennzahlen auf: SZ 34,4, OHZ 3,1, Tg ca. 55,0°C.

### Beispiel 1

Analog zum Vergleichsbeispiel A werden in der ersten Reaktionsstufe 491,64 g (4,72 Mol) 2,2-Dimethylpropandiol 1,3, 19,24 g (0,31 Mol) Ethylenglykol, 32,29 g (0,31 Mol) Pentandiol 1,5, 0,1%, bezogen auf die Gesamtmenge des fertigen Harzes, Sn-haltiger Katalysator und 782,52 g (4,71 Mol) Terephthalsäure zu einem hydroxylfunktionellen Polyesterharz umgesetzt.

Dieses wird in der beschriebenen Weise unter Zusatz von 127,93 g Isophthalsäure (0,77 Mol) und 29,23 g Adipinsäure (0,20 Mol) zum fertigen Polyesterharz umgesetzt. Das fertige Harz weist folgende Kennzahlen auf: SZ 34,2, OHZ 3,8, Tg ca. 56,0°C.

### Beispiel 2

Analog zum Vergleichsbeispiel A werden in der ersten Reaktionsstufe 491,64 g (4,72 Mol) 2,2-Dimethylpropandiol 1,3, 19,24 g (0,31 Mol) Ethylenglykol, 36,64 g (0,31 Mol) 3-Methylpentandiol 1,5, 0,1%, bezogen auf die Gesamtmenge des fertigen Harzes, Sn-haltiger Katalysator und 782,52 g (4,71 Mol) Terephthalsäure zu einem hydroxylfunktionellen Polyesterharz umgesetzt.

Dieses wird in der beschriebenen Weise unter Zusatz von 127,93 g Isophthalsäure (0,77 Mol) und 29,23 g Adipinsäure (0,20 Mol) zum fertigen Polyesterharz umgesetzt. Das fertige Harz weist folgende Kennzahlen auf: SZ 34,0, OHZ 3,8, Tg ca. 55,5°C.

### Beispiel 3

Analog zum Vergleichsbeispiel A werden in der ersten Reaktionsstufe 472,89 g (4,54 Mol) 2,2-Dimethylpropandiol 1,3, 24,83 g (0,40 Mol) Ethylenglykol, 41,66 g (0,40 Mol) Pentandiol 1,5, 0,1%, bezogen auf die Gesamtmenge des fertigen Harzes, Sn-haltiger Katalysator und 792,49 g (4,77 Mol) Terephthalsäure zu einem hydroxylfunktionellen Polyesterharz umgesetzt.

Dieses wird in der beschriebenen Weise unter Zusatz von 56,49 g (0,34 Mol) Isophthalsäure, 68,88 g (0,40 Mol) Cyclohexandicarbonsäure 1,4 und 24,84 g Adipinsäure (0,17 Mol) zum fertigen Polyesterharz umgesetzt. Das fertige Harz weist folgende Kennzahlen auf: SZ 34,3, OHZ 4,1, Tg ca. 55,0°C.

### Beispiel 4

Analog zum Vergleichsbeispiel A werden in der ersten Reaktionsstufe 472,89 g (4,54 Mol) 2,2-Dimethylpropandiol 1,3, 24,83 g (0,40 Mol) Ethylenglykol, 20,83 g (0,20 Mol) Pentandiol 1,5, 23,64 g (0,20 Mol) 3-Methylpentandiol 1,5, 0,1%, bezogen auf die Gesamtmenge des fertigen Harzes, Sn-haltiger Katalysator und 792,49 g (4,77 Mol) Terephthalsäure zu einem hydroxylfunktionellen Polyesterharz umgesetzt.

Dieses wird in der beschriebenen Weise unter Zusatz von 56,49 g (0,34 Mol) Isophthalsäure, 68,88 g (0,40 Mol) Cyclohexandicarbonsäure 1,4 und 24,84 g (0,17 Mol) Adipinsäure zum fertigen Polyesterhar umgesetzt. Das fertige Harz weist folgende Kennzahlen auf: SZ 34,3, OHZ 4,1, Tg ca. 55,0°C.

### Beispiel 6

Analog zum Vergleichsbeispiel A werden in der ersten Reaktionsstufe 444,76 g (4,27 Mol) 2,2-Dimethylpropandiol 1,3, 38,49 g (0,62 Mol) Ethylenglykol, 46,87 g (0,45 Mol) Pentandiol 1,5, 0,1%, bezogen auf die Gesamtmenge des fertigen Harzes, Sn-haltiger Katalysator und 810,76 g (4,88 Mol) Terephthalsäure zu einem hydroxylfunktionellen Polyesterharz umgesetzt.

Dieses wird in der beschriebenen Weise unter Zusatz von 137,76 g (0,80 Mol) Cyclohexandicarbonsäure 1,4 zum fertigen Polyesterharz umgesetzt. Das fertige Harz weist folgende Kennzahlen auf: SZ 33,5, OHZ 3,0, Tg ca. 52,5°C.

### Beispiel 9

Analog zum Vergleichsbeispiel A werden in der ersten Reaktionsstufe 469,24g (4,505 Mol) 2,2-Dimethylpropandiol 1,3, 27,94 g (0,45 Mol) Ethylenglykol, 46,87 g (0,45 Mol) Pentandiol 1,5, 0,1%, bezogen auf die Gesamtmenge des fertigen Harzes, Sn-haltiger Katalysator und 808,27 g (4,865 Mol) Terephthalsäure zu einem hydroxylfunktionellen Polyesterharz umgesetzt.

Dieses wird in der beschriebenen Weise unter Zusatz von 103,84 g Isophthalsäure (0,625 Mol) und 14,61 g Adipinsäure (0,10 Mol) zum fertigen Polyesterharz umgesetzt. Das fertige Harz weist folgende Kennzahlen auf: SZ 27,3, OHZ 3,9, Tg ca. 57,5°C.

### Beispiel 10

Analog zum Vergleichsbeispiel A werden in der ersten Reaktionsstufe 491,64 g (4,72 Mol) 2,2-Dimethylpropandiol 1,3, 36,94 g (0,595 Mol) Ethylenglykol, 2,61 g (0,025 Mol) Pentandiol 1,5, 0,1%, bezogen auf die Gesamtmenge des fertigen Harzes, Sn-haltiger Katalysator und 777,54 g (4,68 Mol) Terephthalsäure zu einem hydroxylfunktionellen Polyesterharz umgesetzt.

Dieses wird in der beschriebenen Weise unter Zusatz von 99,68 g Isophthalsäure (0,60 Mol) und 58,46 g Adipinsäure (0,40 Mol) zum fertigen Polyesterharz umgesetzt. Das fertige Harz weist folgende Kennzahlen auf: SZ 34,6, OHZ 3,8, Tg ca. 55,2°C.

### Beispiel 11

Analog zu Vergleichsbeispiel A werden in der ersten Reaktionsstufe 491,64 g (4,72 Mol) 2,2-Dimethylpropandiol 1,3, 33,83 g (0,545 Mol) Ethylenglykol, 7,81 g (0,075 Mol) Pentandiol 1,5, 0,1 %, bezogen auf die Gesamtmenge des fertigen Harzes, Sn-haltiger Katalysator und 794,15 g (4,78 Mol) Terephthalsäure zu einem hydroxylfunktionellen Polyesterharz umgesetzt.

Dieses wird in der beschriebenen Weise unter Zusatz von 99,68 g Isophthalsäure (0,60 Mol) und 43,84 g Adipinsäure (0,30 Mol) zum fertigen Polyesterharz umgesetzt. Das fertige Harz weist folgende Kennzahlen auf: SZ 34,2, OHZ 4,2, Tg ca. 55,0°C.

### Beispiel 12

Analog zu Vergleichsbeispiel A werden in der ersten Reaktionsstufe 491,64 g (4,72 Mol) 2,2-Dimethylpropandiol 1,3, 28,87 g (0,465 Mol) Ethylenglykol, 16,14 g (0,155 Mol) Pentandiol 1,5, 0,1 %, bezogen auf die Gesamtmenge des fertigen Harzes, Sn-haltiger Katalysator und 794,15 g (4,78 Mol) Terephthalsäure zu einem hydroxylfunktionellen Polyesterharz umgesetzt.

Dieses wird in der beschriebenen Weise unter Zusatz von 99,68 g Isophthalsäure (0,60 Mol) und 43,84 g Adipinsäure (0,30 Mol) zum fertigen Polyesterharz umgesetzt. Das fertige Harz weist folgende Kennzahlen auf: SZ 33,8, OHZ 3,0, Tg ca. 54°C.

### Herstellung der Pulverlacke

Sämtliche in den Tabellen angeführten Pulverlacke sind gemäß nachstehenden Formulierungen herstellbar:
a) Pulverlacke, mit β-Hydroxyalkylamid vernetzt:

| Rohstoff | Gewichtsteile |
|---|---|
| Polyesterharz | 61,86 |
| Primid* XL-552 | 3,26 |
| Byk 364 P (Fa. Byk Chemie) | 1,30 |
| Benzoin | 0,20 |
| Titan 2310 (Fa. Kronos) | 31,48 |

b) Pulverlacke, mit Polyepoxid vernetzt:

| Rohstoff | Gewichtsteile Vergleichsbeispiele A,B,C, Beispiele 1-4,6 | Gewichtsteile Vergleichsbeispiel E Beispiel 9 |
|---|---|---|
| Polyesterharz | 59,48 | 58,18 |
| Araldit PT 810 | 4,48 | ---- |
| Araldit PT 910 | ---- | 4,68 |
| DT 3126 (Fa. CIBA) | 1,16 | 2,26 |
| Byk 364 P (Fa. Byk Chemie) | 1,30 | 1,30 |
| Benzoin | 0,20 | 0,20 |
| Titan 2310 (Fa. Kronos) | 31,48 | 31,48 |

Die Formulierungsbestandteile werden in einem Henschel-Mischer bei 700 Upm während 30 Sekunden trocken gemischt und anschließend auf einem Buss-Co-Kneter (PLK 46) bei einer Manteltemperatur von 100°C extrudiert. Das erhaltene Extrudat wird gekühlt, gebrochen, gemahlen und auf eine Kornfeinheit < 90 µm abgesiebt.

Die lacktechnischen Prüfungen erfolgen auf gelbchromatierten Aluminiumblechen Al Mg 1 F 13, mill finish, Dicke 0,7, mm bei einer Einbrenntemperatur von 180°C und einer Einbrennzeit von 10 Minuten (Objekttemperatur). Die Lackfilmdicke lag bei etwa 80 µm.

Zur Simulation der Alterung werden die beschichteten Bleche über einen Zeitraum von 4 Wochen einem Wechselklima ausgesetzt: jeweils 4 Tage bei Raumklima (23+/- 2 °C, ca. 50 % rel. Feuchte) und 3 Tage 55 °C im Wärmeschrank. Dieser Zyklus wird wiederholt, wobei in Wochenabständen die beschichteten Prüfbleche bei Raumtemperatur der Kugelschlagprüfung gem. ASTM D 2794, Kugeldurchmesser 1/2 inch, bei maximal 70 inch pound (maximal mögliche Deformierung der Bleche, welche noch nicht zu deren Reißen führt), unter-Prüfrunde werden die Prüfbleche 24 h im Kühlschrank gelagert und anschließend bei 8°C erneut auf ihre Impact-Resistenz untersucht.

Zur Prüfung der Wetterbeständigkeit werden die Prüfbleche im Q-Panel Accelerated Weathering Tester gemäß ASTM G 53-77 unter Verwendung der UVB-313-Lampen des Geräteherstellers (The Q-Panel Company) 168 Stunden (Formulierungen, die β-Hydroxyalkylamid enthalten) bzw. 336 Stunden (Formulierungen, die Polyepoxide enthalten) lang bewittert. Die Bedingungen sind wie folgt: 4 h UV bei 60 °C und 4 h Kondensation bei 45 °C im ständigen Wechsel. Zur Bewertung der Bewitterungsresistenz der Prüflinge werden deren Ausgangsund Endglanz nach Gardner, gemessen unter 60°, verglichen.

Die nachfolgenden Tabelle zeigen die dabei erhaltenen Ergebnisse a) für mit β-Hydroxyalkylamiden vernetzte Pulverlacke und b) für mit Polyepoxiden vernetzte Pulverlacke:

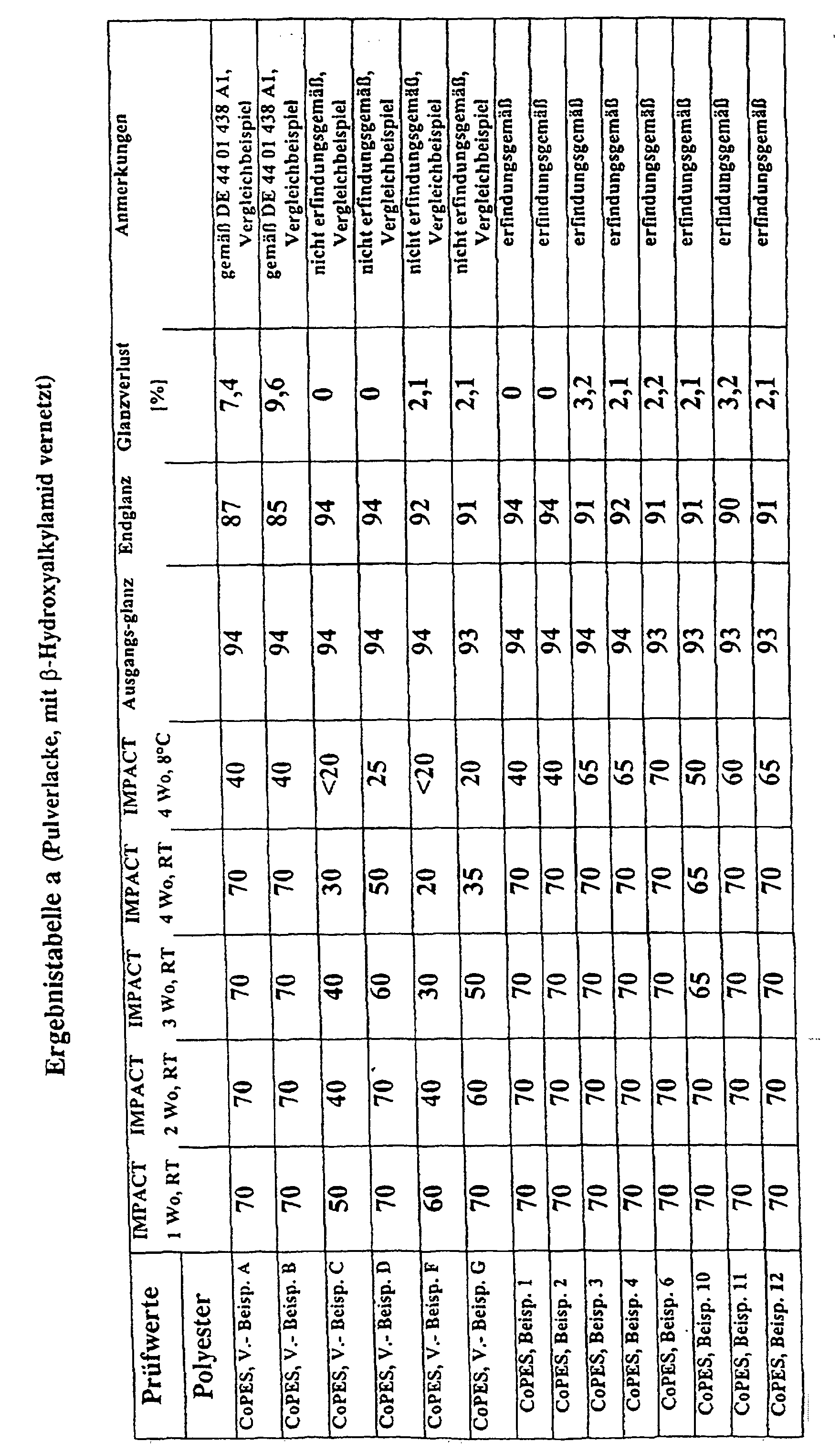

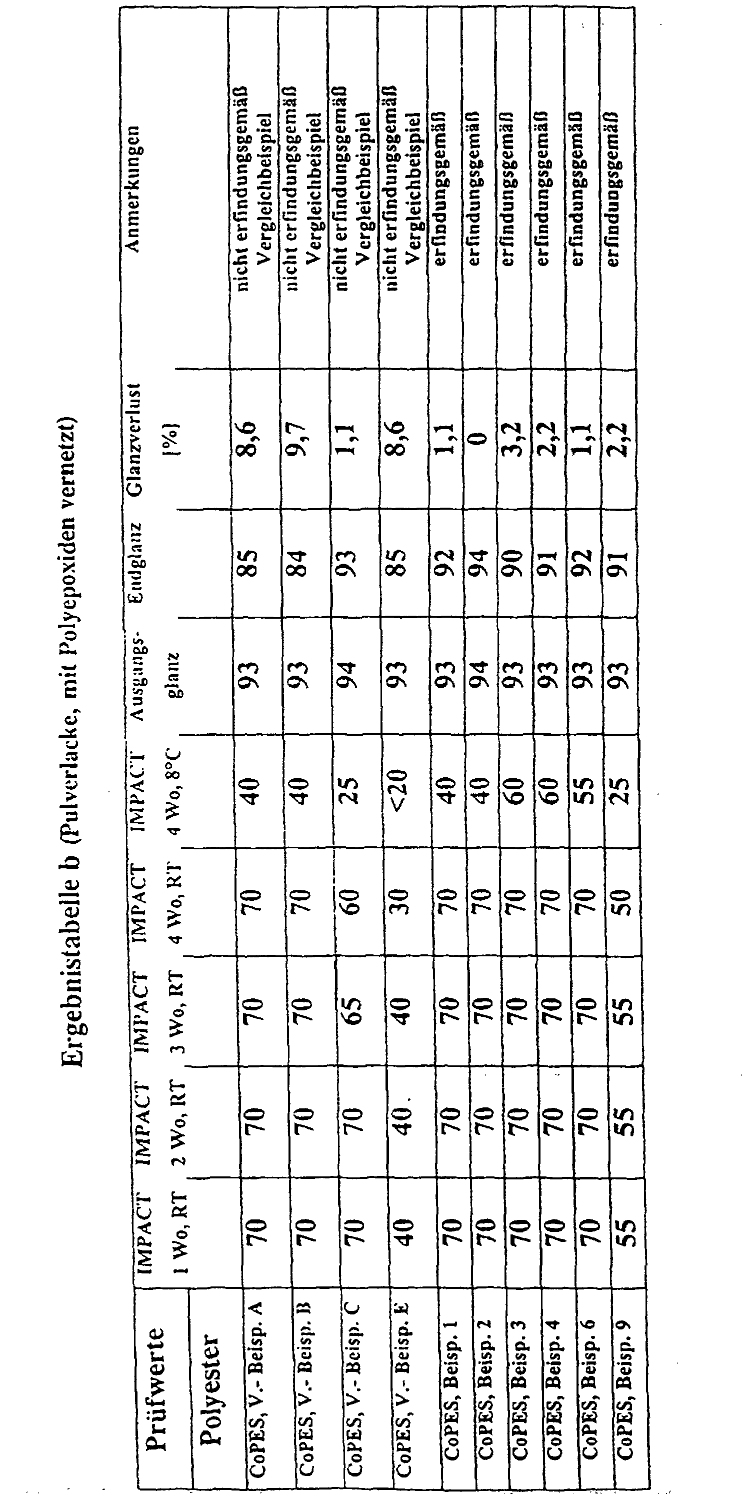

## Patentansprüche

1. Pulverlackformulierung, bestehend aus mindestens einem a) carboxylfunktionellen Polyesterharz, mindestens einem b) aus der Gruppe organischer Verbindungen, die zur Reaktion mit den Carboxylgruppen des Polyesters unter Herstellung einer kovalenten Bindung fähig sind, ausgewählten Vernetzer und c) üblichen Additiven sowie ggf. Pigmenten und Füllstoffen, wobei das a) Polyesterharz eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt,
**dadurch gekennzeichnet, daß** das Polyesterharz
maximal 80 Mol-% Isophthalsäure, bezogen auf die Gesamtmenge an Dicarbonsäuren,
mindestens 20 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C
wobei die genannten Diole Pentandiol 1,5 und/oder mindestens ein mit einem oder mehreren seitlichen Alkylsubstituenten ausgestattetes Pentandiol 1,5, wie z.B. 3-Methylpentandiol 1,5, im molaren Gesamtausmaß von 0,5 bis 30%, bezogen auf die Menge aller Diole, umfassen.

2. Pulverlackformulierung nach Anspruch 1, bestehend aus mindestens einem a) carboxylfunktionellen Polyesterharz, mindestens einem b) β-Hydroxyalkylamid als Vernetzer und c) üblichen Additiven sowie ggf. Pigmenten und Füllstoffen, wobei das a) Polyesterharz eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt,
**dadurch gekennzeichnet, daß** das Polyesterharz
maximal 61,5 Mol-% Isophthalsäure, bezogen auf die Gesamtmenge an Dicarbonsäuren,
mindestens 38,5 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C enthält,
wobei die genannten Diole Pentandiol 1,5 und/oder mindestens ein mit einem oder mehreren seitlichem Alkylsubstituenten ausgestattetes Pentandiol 1,5, wie z.B. 3-Methylpentandiol 1,5, im molaren Gesamtausmaß von 0,5 bis 30%, bezogen auf die Menge aller Diole, umfassen.

3. Pulverlackformulierung nach Anspruch 1, bestehend aus mindestens einem a) carboxylfunktionellen Polyesterharz, mindestens einem b) Polyepoxid als Vernetzer und c) üblichen Additiven sowie ggf. Pigmenten und Füllstoffen, wobei das a) Polyesterharz eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt,
**dadurch gekennzeichnet, daß** das Polyesterharz
maximal 80 Mol-% Isophthalsäure, bezogen auf die Gesamtmenge an Dicarbonsäuren,
mindestens 20 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C
enthält,
wobei die genannten Diole Pentandiol 1,5 und/oder mindestens ein mit einem oder mehreren seitlichem Alkylsubstituenten ausgestattetes Pentandiol 1,5, wie z.B. 3-Methylpentandiol 1,5, im molaren Gesamtausmaß von 0,5 bis 30%, bezogen auf die Menge aller Diole, umfassen.

4. Pulverlackformulierung nach Anspruch 1 oder 2, **dadurch gekennzeichnet, daß** der Vernetzer ein β-Hydroxyalkylamid mit mindestens zwei β-Hydroxyalkylamidgruppen, vorzugsweise Bis[N,N'-di-(β-hydroxyethyl)]-adipamid oder Bis[N,N'-di-(β-hydroxypropyl)]adipamid ist.

5. Pulverlackformulierung nach einem der Ansprüche 1 oder 3, **dadurch gekennzeichnet, daß** der Vernetzer ein monomeres oder polymeres Polyepoxid mit mindestens 2 Epoxidgruppen ist.

6. Pulverlackformulierung nach Anspruch 5, **dadurch gekennzeichnet, daß** der Vernetzer ein Glycidylester einer monomeren Polycarbonsäure ist, wobei diese insbesondere Terephthalsäure und/oder Trimellit(h)säure, vorzugsweise deren Kombination und insbesondere deren Kombination im Verhältnis von ca. 3:1 ist.

7. Pulverlackformulierung nach Anspruch 5, **dadurch gekennzeichnet, daß** der Vernetzer ein Glycidylether der Cyanursäure oder Isocyanursäure ist, wobei dieser insbesondere Triglycidylisocyanurat und/oder Tris-(β-methylglycidyl)-isocyanurat ist.

8. Pulverlackformulierung nach Anspruch 5, **dadurch gekennzeichnet, daß** der Vernetzer ein Glycidylester eines carboxyfunktionellen Polyesterharzes und/oder ein glycidfunktionelles Polyacrylat ist.

9. Pulverlackformulierung nach einem der Ansprüche 1 bis 8, **dadurch gekennzeichnet, daß** das Polyesterharz bis 30 Mol-% Isophthalsäure, bezogen auf die Gesamtmenge aller Dicarbonsäuren, enthält.

10. Pulverlackformulierung nach einem der Ansprüche 1 bis 9, **dadurch gekennzeichnet, daß** das Polyesterharz bei einem Isophthalsäuregehalt von mindestens 10 Mol-%, bezogen auf die Gesamtmenge der Dicarbonsäuren des Polyesters, α,ω-Diole mit 5 C-Atomen in Folge zwischen den Hydroxylgruppen aufweist.

11. Pulverlackformulierung nach einem der Ansprüche 1 bis 10, **dadurch gekennzeichnet, daß** es sich bei den Additiven um solche aus den Gruppen anorganische und organische Pigmente, Füllstoffe, Wachse und Wachsderivate, mikronisierte Kunststoffe wie Polyamide, Polyethylen, Polypropylen oder Polytetrafluorethylen, Verlaufsmittel, Entgasungshilfsmittel, Oxidationsstabilisatoren, Lichtschutzmittel in Form von UV-Absorbern und/oder HALS-Verbindungen, Beschleuniger, Kieselsäure und/oder Aluminiumoxid zur Verbesserung der Rieselfähigkeit und Tribo-Additive handelt.

12. Pulverlackformulierung nach einem der Ansprüche 1 bis 11, **dadurch gekennzeichnet, daß** als Diol gegebenenfalls zusätzlich ein dimerisierter Fettalkohol enthalten ist.

13. Carboxylfunktionelles Polyesterharz, das eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt,
**dadurch gekennzeichnet, daß** das Polyesterharz
maximal 80 Mol-% Isophthalsäure, bezogen auf die Gesamtmenge an Dicarbonsäuren,
mindestens 20 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C
enthält,
wobei die genannten Diole Pentandiol 1,5 und/oder mindestens ein mit einem oder mehreren seitlichem Alkylsubstituenten ausgestattetes Pentandiol 1,5, wie z.B. 3-Methylpentandiol 1,5, im molaren Gesamtausmaß von 0,5 bis 30%, bezogen auf die Menge aller Diole umfassen.

14. Carbofunktionelles Polyesterharz nach Anspruch 13, das eine Säurezahl von 15 bis 70 mg KOH/g Polyesterharz und eine Hydroxylzahl von 10 oder weniger mg KOH/g Polyesterharz aufweist und sich aus difunktionellen Monomeren, nämlich Dicarbonsäuren und Diolen sowie gegebenenfalls Hydroxycarbonsäuren, zusammensetzt,
**dadurch gekennzeichnet, daß** das Polyesterharz
maximal 61,5 Mol-% Isophthalsäure, bezogen auf die Gesamtmenge an Dicarbonsäuren,
mindestens 38,5 Mol-%, bezogen auf die Gesamtmenge an Dicarbonsäuren, mindestens einer anderen Dicarbonsäure aus der Gruppe der aromatischen Dicarbonsäuren mit 8 bis 16 C-Atomen und/oder der aliphatischen Dicarbonsäuren mit 4 bis 22 C-Atomen und/oder der cycloaliphatischen Dicarbonsäuren mit 8 bis 16 C-Atomen und/oder der dimerisierten Fettsäuren, nach Maßgabe einer Glasübergangstemperatur von mindestens 35°C,
mindestens 50 Mol-%, bezogen auf die Gesamtmenge an Diolen, mindestens eines verzweigten aliphatischen Diols mit 4 bis 12 C-Atomen, welches auch eine Estergruppe enthalten kann, maximal 50 Mol-%, bezogen auf die Gesamtmenge an Diolen, mindestens eines linearen aliphatischen Diols mit 2 bis 22 C-Atomen und/oder mindestens eines cycloaliphatischen Diols mit 6 bis 16 C-Atomen, nach Maßgabe einer Glasübergangstemperatur von mindestens 35°C
enthält,
wobei die genannten Diole Pentandiol 1,5 und/oder mindestens ein mit einem oder mehreren seitlichem Alkylsubstituenten ausgestattetes Pentandiol 1,5, wie z.B. 3-Methylpentandiol 1,5, im molaren Gesamtausmaß von 0,5 bis 30 %, bezogen auf die Menge aller Diole, umfassen.

15. Polyesterharz nach Anspruch 13 oder 14, **dadurch gekennzeichnet, daß** es bei einem Isophthalsäuregehalt von mindestens 10 Mol-%, bezogen auf die Gesamtmenge der Dicarbonsäuren des Polyesters, α,ω-Diole mit 5 C-Atomen in Folge zwischen den Hydroxylgruppen aufweist.

16. Polyesterharz nach Anspruch 13 oder 14, **dadurch gekennzeichnet, daß** das Polyesterharz bis 30 Mol-% Isophthalsäure, bezogen auf die Gesamtmenge der Dicarbonsäuren des Polyesters, enthält.

17. Polyesterharz nach einem der Ansprüche 13 bis 16, **dadurch gekennzeichnet, daß** als Diol gegebenenfalls zusätzlich ein dimerisierter Fettalkohol enthalten ist.

18. Verwendung carboxylfunktioneller Polyesterharze nach einem der Ansprüche 13 bis 17 zur Herstellung von Pulverlackformulierungen.

19. Verfahren zur Herstellung wärmehärtbarer Pulverlackformulierungen auf Basis von carboxylfunktionellen Polyesterharzen nach einem oder mehreren der vorhergehenden Ansprüchen, **dadurch gekennzeichnet, daß** dem Bindemittelharz mindestens ein Vertreter aus der Gruppe der β-Hydroxyalkylamide oder Polyepoxide und gegebenenfalls weitere Additive zugemischt wird/werden, und danach die Masse bei 80 bis 130° C extrudiert, ausgetragen, granuliert, gemahlen und auf eine Korngröße < 100 µm abgesiebt wird.

20. Verwendung von Pulverbeschichtungsmassen nach einem oder mehreren der vorhergehenden Ansprüchen zur Herstellung von Schutzschichten bzw. Überzügen auf Gegenständen durch elektrostatisches Beschichten oder Wirbelsintern.

21. Verwendung von Pulverbeschichtungsmassen nach Anspruch 20 mit der Maßgabe, daß die Schutzschichten bzw. Überzüge auf den Gegenständen bei Temperaturen zwischen 120° bis 220° C, vorzugsweise 130 bis 200° C und insbesondere bei 140 bis 160° C eingebrannt werden.

## Claims

1. Powder coating formulation consisting of at least one a) carboxyl functional polyester resin, at least one b) cross-linker selected from a group of organic compounds which are capable by reacting with the carboxyl groups of the polyester with the formation of a covalent bond and c) customary additives together with, if appropriate, pigments and fillers,
wherein the a) polyester resin has an acid number of 15 to 70 mg KOH/g polyester resin and a hydroxyl number of 10 or fewer mg KOH/g polyester resin and is composed of difunctional monomers, namely dicarboxylic acids and diols as well as, if appropriate, hydroxycarboxylic acids,
**characterised in that** the polyester resin contains
at most 80 Mol % isophthalic acid taken on the total quantity of dicarboxylic acids
at least 20 Mol % taken on the total quantity of dicarboxylic acids of at least one other dicarboxylic acid from the group of the aromatic dicarboxylic acids with 8 to 16 C-atoms and/or the aliphatic dicarboxylic acids with 4 to 22 C-atoms and/or the cycloaliphatic dicarboxylic acids with 8 to 16 C-atoms and/or the dimerised fatty acids, in proportion to give a glass transition temperature of at least 35°C,
at least 50 Mol % taken on the total quantity of diols of at least one branched aliphatic diol with 4 to 12 C-atoms, which can also contain an ester group, at most 50 Mol % taken on the total quantity of diols of at least one linear aliphatic diol with 2 to 22 C-atoms and/or at least one cycloaliphatic diol with 6 to 16 C-atoms, in proportion to give a glass transition temperature of at least 35°C,
wherein the noted diols comprise 1,5-pentane diol and/or at least one 1,5-pentane diol provided with one or several lateral alkyl substituents, such as e.g. 3-methyl-1,5-pentane diol in a total molar amount of 0.5 to 30% of the quantity of all the diols.

2. Powder coating formulation according to Claim 1 consisting of at least one a) carboxyl-functional polyester resin, at least one b) β-hydroxyalkylamide as cross-linker and c) customary additives as well as, if desired, pigments and fillers, wherein the a) polyester resin has an acid number of 15 to 70 mg KOH/g polyester resin and a hydroxyl number of 10 or fewer mg KOH/g polyester resin and is composed of difunctional monomers, namely dicarboxylic acids and diols as well as, if desired, hydroxycarboxylic acids,
**characterised in that** the polyester resin contains
at most 61.5 Mol % isophthalic acid taken on the total quantity of dicarboxylic acids,
at least 38.5 Mol % taken on the total quantity of dicarboxylic acids of at least one other dicarboxylic acid from the group of the aromatic dicarboxylic acids with 8 to 16 C-atoms and/or the aliphatic dicarboxylic acids with 4 to 22 C-atoms and/or the dimerised fatty acids, in proportion to give a glass transition temperature of at least 35°C,
at least 50 Mol %, taken on the total quantity of diols, of at least one branched aliphatic diol with 4 to 12 C-atoms, which can also contain an ester group, at most 50 Mol % taken on the total quantity of diols of at least one linear aliphatic diol with 2 to 22 C-atoms and/or at least one cycloaliphatic diol with 6 to 16 C-atoms, in proportion to give a glass transition temperature of at least 35°C,
wherein the noted diols comprise 1,5-pentane diol and/or at least one 1,5-pentane diol provided with one or several lateral alkyl substituents such as e.g. 3-methyl-1,5-pentane diol in a total molar amount of 0.5 to 30% of the quantity of all of the diols.

3. Powder coating formulation according to Claim 1 consisting of at least one a) carboxyl-functional polyester resin, at least one b) polyepoxide as cross-linker and c) customary additives as well as, if desired, pigments and fillers, wherein the a) polyester resin has an acid number of 15 to 70 mg KOH/g polyester resin and a hydroxyl number of 10 or fewer mg KOH/g polyester resin and is composed of difunctional monomers, namely dicarboxylic acids and diols as well as, if desired, hydroxycarboxylic acids,
**characterised in that** the polyester resin contains
at most 80 Mol % isophthalic acid taken on the total quantity of dicarboxylic acids,
at least 20 Mol % taken on the total quantity of dicarboxylic acids of at least one other dicarboxylic acid from the group of the aromatic dicarboxylic acids with 8 to 16 C-atoms and/or the aliphatic dicarboxylic acids with 4 to 22 C-atoms and/or the cycloaliphatic dicarboxylic acids with 8 to 16 C-atoms and/or the dimerised fatty acids, in proportion to give a glass transition temperature of at least 35°C,
at least 50 Mol % taken on the total quantity of diols of at least one branched aliphatic diol with 4 to 12 C-atoms, which can also contain an ester group, at most 50 Mol % taken on the total quantity of diols, of at least one linear aliphatic diol with 2 to 22 C-atoms and/or at least one cycloaliphatic diol with 6 to 16 C-atoms, in proportion to give a glass transition temperature of at least 35°C,
wherein the noted diols comprise 1,5-pentane diol and/or at least one 1,5-pentane diol provided with one or several lateral alkyl substituents such as e.g. 3-methyl-1,5-pentane diol in a total molar amount of 0.05 to 30% of the quantity of all of the diols.

4. Powder varnish formulation according to Claim 1 or 2 **characterised in that** the cross-linker is a β-hydroxyalkylamide with at least two β-hydroxyalkylamide groups, preferably bis[N,N'-di-(β-hydroxyethyl)adipamide or bis[N,N'-di-(β-hydroxypropyl)adipamide.

5. Powder varnish formulation according to one of Claims 1 or 3 **characterised in that** the cross-linker is a monomeric or polymeric polyepoxide with at least two epoxide groups.

6. Powder varnish formulation according to Claim 5 **characterised in that** the cross-linker is a glycidyl ester of a monomeric polycarboxylic acid,
wherein this is particularly terephthalic acid and/or trimellitic acid, preferably their combination and particularly their combination in a ratio of ca. 3:1.

7. Powder varnish formulation according to Claim 5 **characterised in that** the cross-linker is a glycidyl ether of cyanuric acid or isocyanuric acid,
wherein this is especially triglycidyl isocyanurate and/or tris(β-methylglycidyl)isocyanurate.

8. Powder varnish formulation according to Claim 5 **characterised in that** the cross-linker is a glycidyl ester of a carboxy-functional polyester4 resin and/or a glycidyl-functional polyacrylate.

9. Powder varnish formulation according to one of Claims 1 to 8 **characterised in that** the polyester resin contains up to 30 Mol % isophthalic acid taken on the total quantity of all of the dicarboxylic acids.

10. Powder varnish formulation according to one of Claims 1 to 8 **characterised in that** the polyester resin with an isophthalic acid content of at least 10 Mol % taken on the total quantity of dicarboxylic acids of the polyester has α,ω-diols with 5 C-atoms in a series between the hydroxyl groups.

11. Powder varnish formulation according to one of Claims 1 to 10 **characterised in that** it concerns with respect to the additives such as are selected from the group of inorganic and organic pigments, fillers, waxes and wax derivatives, micronised plastics such as polyamide, polyethylene, polypropylene or polytetrafluoroethylene, blending agents, de-gassing auxiliaries, oxidation stabilisers, light protection agents in the form of UV-absorbers and/or HALS compounds, accelerators, silicic acid and/or aluminium oxide for improving the pouring ability and tribo additives.

12. Powder varnish formulation according to one of Claims 1 to 11 **characterised in that** there is contained as diol if necessary additionally a dimerised fatty alcohol.

13. Carboxy-functional polyester resin which has an acid number of 15 to 70 mg KOH/g polyester resin and a hydroxyl number of 10 or fewer mg KOH/g polyester resin and which is composed of difunctional monomers, namely dicarboxylic acids and diols as well as, if desired, hydroxycarboxylic acids,
**characterised in that** the polyester resin contains
at most 80 % isophthalic acid taken on the total quantity of dicarboxylic acids,
at least 20 Mol % taken on the total quantity of dicarboxylic acids of at least one other dicarboxylic acid from the group of the aromatic dicarboxylic acids with 8 to 16 C-atoms and/or the aliphatic dicarboxylic acids with 4 to 22 C-atoms and/or the cycloaliphatic dicarboxylic acids with 8 to 16 C-atoms and/or the dimerised fatty acids, in proportion to give a glass transition temperature of at least 35°C,
at least 50 Mol % taken on the total quantity of diols of at least one branched aliphatic diol with 4 to 12 C-atoms, which can also contain an ester group, at most 50 Mol % taken on the total quantity of diols of at least one linear aliphatic diol with 2 to 22 C-atoms and/or at least of a cycloaliphatic diol with 6 to 16 C-atoms, in proportion to give a glass transition temperature of at least 35°C,
wherein the noted diols comprise 1,5-pentane diol and/or at least one 1,5-pentane diol provided with one or several lateral alkyl substituents such as e.g. 3-methyl-1 ,5-pentane diol in a total molar amount of 0.5 to 30% of the quantity of all of the diols.

14. Carboxy-functional polyester resin according to Claim 13 which has an acid number of 15 to 70 mg KOH/g polyester resin and a hydroxyl number of 10 or fewer mg KOH/g polyester resin and is composed of difunctional monomers, namely dicarboxylic acids and diols as well as, if desired, hydroxycarboxylic acids,
**characterised in that** the polyester resin contains
at most 61.5 Mol % isophthalic acid taken on the total quantity of dicarboxylic acids,
at least 38.5 Mol % taken on the total quantity of dicarboxylic acids of at least one other dicarboxylic acid from the group of the aromatic dicarboxylic acids with 8 to 16 C-atoms and/or the aliphatic dicarboxylic acids with 4 to 22 C-atoms and/or the cycloaliphatic dicarboxylic acids with 8 to 16 C-atoms and/or the dimerised fatty acids, in proportion to give a glass transition temperature of at least 35°C,
at least 50 Mol %, taken on the total quantity of diols, of at least one branched aliphatic diol with 4 to 12 C-atoms, which can also contain an ester group, at most 50 Mol % taken on the total quantity of diols of at least one linear aliphatic diol with 2 to 22 C-atoms and/or at least one cycloaliphatic diol with 6 to 16 C-atoms, in proportion to give a glass transition temperature of at least 35°C,
wherein the noted diols comprise 1,5-pentane diol and/or at least one 1,5-pentane diol provided with one or several lateral alkyl substituents such as e.g. 3-methyl-1,5-pentane diol in a total molar amount of 0.5 to 30% of the quantity of all of the diols.

15. Polyester resin according to Claim 13 or 14 **characterised in that** it has, with an isophthalic acid content of at least 10 Mol % taken on the total quantity of dicarboxylic acids of the polyester, α,ω-diols with 5 carbon atoms in a series between the hydroxyl groups.

16. Polyester resin according to Claim 13 or 14 **characterised in that** the polyester resin contains up to 30 Mol % isophthalic acid taken on the total quantity of the dicarboxylic acids of the polyester.

17. Polyester resin according to one of Claims 13 to 16 **characterised in that**, as diol, if desired, additionally a dimerised fatty alcohol is included.

18. The use of carboxy-functional polyester resins according to one of Claims 13 to 17 for the manufacture of powder varnish formulations.

19. Process for the manufacture of thermosettable powder varnish formulations on the basis of carboxyl-functional polyester resins according to one or more of the preceding Claims, **characterised in that**, to the binding agent resin, at least one agent is mixed in from the group of β-hydroxyalkylamide or polyepoxides and, if desired, further additives, and thereafter the mass is extruded at 80 to 130°C, drawn out, granulated, milled and sieved to a particle size of < 100 µm.

20. Use of powder coating compositions in accordance with one or more of the preceding Claims for the manufacture of protective layers or overcoats on articles by electrostatic coating or whirl sintering.

21. Use of powder coating compositions according to Claim 20 with the provision that the protective coatings or overcoats are burnt on to the articles at temperatures of between 120°C and 220°C, preferably 130 to 200°C and particularly at 140 to 160°C.

## Revendications

1. Formulation de laque en poudre, composée d'au moins a) une résine de polyester à fonctionnalité carboxyle, au moins b) un agent de réticulation sélectionné parmi le groupe des composés organiques qui sont aptes à réagir avec les groupes carboxyle du polyester en formant une liaison covalente, et c) des additifs usuels et éventuellement des pigments et des matières de charge, dans laquelle a) la résine de polyester possède un indice d'acidité compris entre 15 et 70 mg KOH/g de résine de polyester et un indice hydroxyle au plus égal à 10 mg KOH/g de résine de polyester, et se compose de monomères difonctionnels, à savoir des acides dicarboxyliques et des diols, ainsi qu'éventuellement des acides hydroxycarboxyliques,
**caractérisée en ce que** la résine de polyester contient
au maximum 80 % en mole d'acide isophtalique, sur la base de la quantité totale d'acides dicarboxyliques,
au moins 20 % en mole, sur la base de la quantité totale d'acides dicarboxyliques, d'au moins un autre acide dicarboxylique issu du groupe des acides dicarboxyliques aromatiques comportant 8 à 16 atomes de carbone et/ou des acides dicarboxyliques aliphatiques comportant 4 à 22 atomes de carbone et/ou des acides dicarboxyliques cycloaliphatiques comportant 8 à 16 atomes de carbone et/ou des acides gras dimérisés, selon une température de transition vitreuse d'au moins 35 °C,
au moins 50 % en mole, sur la base de la quantité totale de diols, d'au moins un diol aliphatique ramifié comportant 4 à 12 atomes de carbone, et qui peut aussi contenir un groupe ester, au maximum 50 % en mole, sur la base de la quantité totale des diols, d'au moins un diol aliphatique linéaire comportant 2 à 22 atomes de carbone et/ou d'au moins un diol cycloaliphatique comportant 6 à 16 atomes de carbone, selon une température de transition vitreuse d'au moins 35 °C,
où les diols nommés comprennent le pentadiol 1,5 et/ou au moins un pentadiol 1,5 comportant un ou plusieurs substituants latéraux alkyle, comme par exemple le 3-méthylpentadiol 1,5, selon une quantité molaire totale comprise entre 0,5 et 30 %, sur la base de la quantité de tous les diols.

2. Formulation de laque en poudre selon la revendication 1, composée d'au moins a) une résine de polyester à fonctionnalité carboxyle, au moins b) un β-hydroxyalkylamide en tant qu'agent de réticulation, et c) des additifs usuels et éventuellement des pigments et des matières de charge, dans laquelle a) la résine de polyester possède un indice d'acidité compris entre 15 et 70 mg KOH/g de résine de polyester et un indice hydroxyle au plus égal à 10 mg KOH/g de résine de polyester, et se compose de monomères difonctionnels, à savoir des acides dicarboxyliques et des diols, ainsi qu'éventuellement des acides hydroxycarboxyliques,
**caractérisée en ce que** la résine de polyester contient
au maximum 61,5 % en mole d'acide isophtalique, sur la base de la quantité totale d'acides dicarboxyliques,
au moins 38,5 % en mole, sur la base de la quantité totale d'acides dicarboxyliques, d'au moins un autre acide dicarboxylique issu du groupe des acides dicarboxyliques aromatiques comportant 8 à 16 atomes de carbone et/ou des acides dicarboxyliques aliphatiques comportant 4 à 22 atomes de carbone et/ou des acides dicarboxyliques cycloaliphatiques comportant 8 à 16 atomes de carbone et/ou des acides gras dimérisés, selon une température de transition vitreuse d'au moins 35 °C,
au moins 50 % en mole, sur la base de la quantité totale de diols, d'au moins un diol aliphatique ramifié comportant 4 à 12 atomes de carbone, qui peut aussi contenir un groupe ester, au maximum 50 % en mole, sur la base de la quantité totale des diols, d'au moins un diol aliphatique linéaire comportant 2 à 22 atomes de carbone et/ou d'au moins un diol cycloaliphatique comportant 6 à 16 atomes de carbone, selon une température de transition vitreuse d'au moins 35 °C,
où les diols nommés comprennent le pentadiol 1,5 et/ou au moins un pentadiol 1,5 comportant un ou plusieurs substituants latéraux alkyle, comme par exemple le 3-méthylpentadiol 1,5, selon une quantité molaire totale comprise entre 0,5 et 30 %, sur la base de la quantité de tous les diols.

3. Formulation de laque en poudre selon la revendication 1, composée d'au moins a) une résine de polyester à fonctionnalité carboxyle, au moins b) un polyépoxyde en tant qu'agent de réticulation, et c) des additifs usuels et éventuellement des pigments et des matières de charge, dans laquelle a) la résine de polyester possède un indice d'acidité compris entre 15 et 70 mg KOH/g de résine de polyester et un indice hydroxyle au plus égal à 10 mg KOH/g de résine de polyester, et se compose de monomères difonctionnels, à savoir des acides dicarboxyliques et des diols, ainsi qu'éventuellement des acides hydroxycarboxyliques,
**caractérisée en ce que** la résine de polyester contient
au maximum 80 % en mole d'acide isophtalique, sur la base de la quantité totale d'acides dicarboxyliques,
au moins 20 % en mole, sur la base de la quantité totale d'acides dicarboxyliques, d'au moins un autre acide dicarboxylique issu du groupe des acides dicarboxyliques aromatiques comportant 8 à 16 atomes de carbone et/ou des acides dicarboxyliques aliphatiques comportant 4 à 22 atomes de carbone et/ou des acides dicarboxyliques cycloaliphatiques comportant 8 à 16 atomes de carbone et/ou des acides gras dimérisés, selon une température de transition vitreuse d'au moins 35 °C,
au moins 50 % en mole, sur la base de la quantité totale de diols, d'au moins un diol aliphatique ramifié comportant 4 à 12 atomes de carbone, qui peut aussi contenir un groupe ester, au maximum 50 % en mole, sur la base de la quantité totale des diols, d'au moins un diol aliphatique linéaire comportant 2 à 22 atomes de carbone et/ou d'au moins un diol cycloaliphatique comportant 6 à 16 atomes de carbone, selon une température de transition vitreuse d'au moins 35 °C,
où les diols nommés comprennent le pentadiol 1,5 et/ou au moins un pentadiol 1,5 comportant un ou plusieurs substituants latéraux alkyle, comme par exemple le 3-méthylpentadiol 1,5, selon une quantité molaire totale comprise entre 0,5 et 30 %, sur la base de la quantité de tous les diols.

4. Formulation de laque en poudre selon la revendication 1 ou 2, **caractérisée en ce que** l'agent de réticulation est un β-hydroxyalkylamide comportant au moins deux groupes β-hydroxyalkylamide, de préférence le bis[N,N'-di(β-hydroxyéthyl)]-adipamide ou le bis[N,N'-di-(β-hydroxypropyl)]-adipamide.

5. Formulation de laque en poudre selon l'une des revendications 1 ou 3, **caractérisée en ce que** l'agent de réticulation est un polyépoxyde monomère ou polymère comportant au moins deux groupes époxyde.

6. Formulation de laque en poudre selon la revendication 5, **caractérisée en ce que** l'agent de réticulation est un ester de glycidyle d'un acide polycarboxylique monomère, où celui-ci est en particulier l'acide téréphtalique et/ou l'acide trimellitique, de préférence leur combinaison et en particulier leur combinaison selon un rapport d'environ 3:1.

7. Formulation de laque en poudre selon la revendication 5, **caractérisée en ce que** l'agent de réticulation est un éther de glycidyle de l'acide cyanurique ou de l'acide isocyanurique, où celui-ci est en particulier l'isocyanurate de triglycidyle et/ou l'isocyanurate de tris-(β-méthylglycidyle).

8. Formulation de laque en poudre selon la revendication 5, **caractérisée en ce que** l'agent de réticulation est un ester de glycidyle d'une résine de polyester à fonctionnalité carboxy et/ou un polyacrylate à fonctionnalité glycidyle.

9. Formulation de laque en poudre selon l'une des revendications 1 à 8, **caractérisée en ce que** la résine de polyester contient jusqu'à 30 % en mole d'acide isophtalique, sur la base de la quantité totale de tous les acides dicarboxyliques.

10. Formulation de laque en poudre selon l'une des revendications 1 à 9, **caractérisée en ce que** la résine de polyester présente, avec une teneur en acide isophtalique d'au moins 10 % en mole, sur la base de la quantité totale des acides dicarboxyliques du polyester, des α,ω-diols comportant 5 atomes de C à la suite entre les groupes hydroxyle.

11. Formulation de laque en poudre selon l'une des revendications 1 à 10, **caractérisée en ce que** les additifs sont des additifs issus des groupes des pigments inorganiques et organiques, des matières de charge, des cires et des dérivés de cire, des matières synthétiques micronisées comme des polyamides, du polyéthylène, du polypropylène, ou du polytétrafluoroéthylène, des agents nivelants, des auxiliaires de dégazage, des stabilisants à l'oxydation, des agents de protection contre la lumière sous la forme d'absorbeurs d'UV et/ou de stabilisants HALS, des accélérateurs, de l'acide silicique et/ou de l'oxyde d'aluminium pour améliorer la coulabilité et des additifs tribologiques.

12. Formulation de laque en poudre selon l'une des revendications 1 à 11, **caractérisée en ce qu'**est contenu, en outre, en tant que diol éventuellement un alcool gras dimérisé.

13. Résine de polyester à fonctionnalité carboxyle, qui possède un indice d'acidité compris entre 15 et 70 mg KOH/g de résine de polyester et un indice hydroxyle au plus égal à 10 mg KOH/g de résine de polyester, et se compose de monomères difonctionnels, à savoir des acides dicarboxyliques et des diols, ainsi qu'éventuellement des acides hydroxycarboxyliques,
**caractérisée en ce que** la résine de polyester contient
au maximum 80 % en mole d'acide isophtalique, sur la base de la quantité totale d'acides dicarboxyliques,
au moins 20 % en mole, sur la base de la quantité totale d'acides dicarboxyliques, d'au moins un autre acide dicarboxylique issu du groupe des acides dicarboxyliques aromatiques comportant 8 à 16 atomes de carbone et/ou des acides dicarboxyliques aliphatiques comportant 4 à 22 atomes de carbone, et/ou des acides dicarboxyliques cycloaliphatiques comportant 8 à 16 atomes de carbone, et/ou des acides gras dimérisés, selon une température de transition vitreuse d'au moins 35 °C,
au moins 50 % en mole, sur la base de la quantité totale de diols, d'au moins un diol aliphatique ramifié comportant 4 à 12 atomes de carbone, qui peut aussi contenir un groupe ester, au maximum 50 % en mole, sur la base de la quantité totale des diols, d'au moins un diol aliphatique linéaire comportant 2 à 22 atomes de carbone et/ou d'au moins un diol cycloaliphatique comportant 6 à 16 atomes de carbone, selon une température de transition vitreuse d'au moins 35 °C,
où les diols nommés comprennent le pentadiol 1,5 et/ou au moins un pentadiol 1,5 comportant un ou plusieurs substituants latéraux alkyle, comme par exemple le 3-méthylpentadiol 1,5, selon une quantité molaire totale comprise entre 0,5 et 30 %, sur la base de la quantité totale de tous les diols.

14. Résine de polyester carbofonctionnelle selon la revendication 13, qui possède un indice d'acidité compris entre 15 et 70 mg KOH/g de résine de polyester et un indice hydroxyle au plus égal à 10 mg KOH/g de résine de polyester, et se compose de monomères difonctionnels, à savoir des acides dicarboxyliques et des diols, ainsi qu'éventuellement des acides hydroxycarboxyliques,
**caractérisée en ce que** la résine de polyester contient
au maximum 61,5 % en mole d'acide isophtalique, sur la base de la quantité totale d'acides dicarboxyliques,
au moins 38,5 % en mole, sur la base de la quantité totale d'acides dicarboxyliques, d'au moins un autre acide dicarboxylique issu du groupe des acides dicarboxyliques aromatiques comportant 8 à 16 atomes de carbone et/ou des acides dicarboxyliques aliphatiques comportant 4 à 22 atomes de carbone, et/ou des acides dicarboxyliques cycloaliphatiques comportant 8 à 16 atomes de carbone, et/ou des acides gras dimérisés, selon une température de transition vitreuse d'au moins 35 °C,
au moins 50 % en mole, sur la base de la quantité totale de diols, d'au moins un diol aliphatique ramifié comportant 4 à 12 atomes de carbone, qui peut aussi contenir un groupe ester, au maximum 50 % en mole, sur la base de la quantité totale des diols, d'au moins un diol aliphatique linéaire comportant 2 à 22 atomes de carbone et/ou d'au moins un diol cycloaliphatique comportant 6 à 16 atomes de carbone, selon une température de transition vitreuse d'au moins 35 °C,
où les diols nommés comprennent le pentadiol 1,5 et/ou au moins un pentadiol 1,5 comportant un ou plusieurs substituants latéraux alkyle, comme par exemple le 3-méthylpentadiol 1,5, selon une quantité molaire totale comprise entre 0,5 et 30 %, sur la base de la quantité de tous les diols.

15. Résine de polyester selon la revendication 13 ou 14, **caractérisée en ce qu'**elle présente, avec une teneur en acide isophtalique d'au moins 10 % en mole, sur la base de la quantité totale des acides dicarboxyliques du polyester, des α,ω-diols comportant 5 atomes de C à la suite entre les groupes hydroxyle.

16. Résine de polyester selon la revendication 13 ou 14, **caractérisée en ce que** la résine de polyester contient jusqu'à 30 % en mole d'acide isophtalique, sur la base de la quantité totale des acides dicarboxyliques du polyester.

17. Résine de polyester selon l'une des revendications 13 à 16, **caractérisée en ce qu'**elle contient en tant que diol éventuellement, en outre, un alcool gras dimérisé.

18. Utilisation de résines de polyester à fonctionnalité carboxyle selon l'une des revendications 13 à 17 pour fabriquer des formulations de laque en poudre.

19. Procédé de fabrication de formulations de laque en poudre thermodurcissables à base de résines de polyester à fonctionnalité carboxyle selon une ou plusieurs des revendications précédentes, **caractérisé en ce que** l'on ajoute en mélange à la résine de liant au moins un représentant du groupe des β-hydroxyalkylamides ou des polyépoxydes et éventuellement d'autres additifs, et que l'on extrude ensuite la masse à 80 à 130 °C, qu'on la déverse, granule, broie et tamise à une taille de grains < 100 µm.

20. Utilisation de masses de revêtement en poudre selon une ou plusieurs des revendications précédentes pour fabriquer des couches protectrices ou des revêtements sur des objets, par revêtement électrostatique ou trempage dans un lit fluidisé.

21. Utilisation de masses de revêtement en poudre selon la revendication 20, à la condition que les couches protectrices ou les revêtements sur des objets soient cuites ou brûlées en profondeur à des températures comprises entre 120 et 220 °C, de préférence entre 130 et 200 °C et en particulier entre 140 et 160 °C.
